# EUROPEAN PATENT APPLICATION

(11) **EP 4 036 820 A1**
(43) Date of publication of application: **03.08.2022**
(21) Application number: 21153917.6
(22) Date of filing: 28.01.2021
(51) Int. Cl.: G06Q 10/00, G06Q 10/06, G06Q 10/04, G06Q 50/06

(54) **APPARATUS FOR OPERATING MAINTENANCE MODEL MODELLING WATER STORAGE OF WATER DISTRIBUTION SYSTEM**

(71) Applicant: Uros AG, 8808 Pfäffikon SZ (CH)
(72) Inventor: Korkiakoski, Jari, 90530 Oulu (FI); Nikurautio, Hannu, 90530 Oulu (FI); Rahikainen, Ilkka, 90530 Oulu (FI)
(74) Representative: Kolster Oy Ab

(57) **Abstract**

Apparatus (100) for operating maintenance model modelling water storage (152) of water distribution system (150) is disclosed. The apparatus (100) includes an input sensor (160) to measure (604) a measured input variable (170) of the water storage (152), and an output sensor (166) to measure (606) a measured output variable (180) of the water storage (152). The apparatus (100) is caused to perform: building up a plurality of the maintenance models (120A, 120B) modelling the water storage (152) using interconnected submodels (140, 142, 144) selected from among a collection (112) of different types of submodels; comparing the measured input variable (170) and the measured output variable (180) against reference parameters (122) of the plurality of the maintenance models (120A, 120B); and based on the comparing, selecting one maintenance model from among the plurality of the maintenance models (120A, 120B) as the selected maintenance model (120A).

## Description

### FIELD

Various embodiments relate to an apparatus for operating a maintenance model modelling a water storage of a water distribution system.

### BACKGROUND

A water distribution system uses different active elements such as valves, pumps, and water reservoirs, which have different functional simulation models so that the water distribution system may be analyzed with other elements such as pipes and circumstances related to usage, leakage, etc. Some water distribution system parts are difficult to simulate due to their complexity and dynamic function. A water tower or valve are examples of such elements. There are different simulation models available, but it is difficult to select the right one due to complexity and practical variations such as aging, scaling, etc. The technical problem is how to find an optimal model.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an apparatus;
FIG. 2 illustrates embodiments of a water distribution system;
FIG. 3 illustrates embodiments of submodels;
FIG. 4 and FIG. 5 illustrate embodiments of maintenance models; and
FIG. 6 is a flow chart illustrating embodiments of a method.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

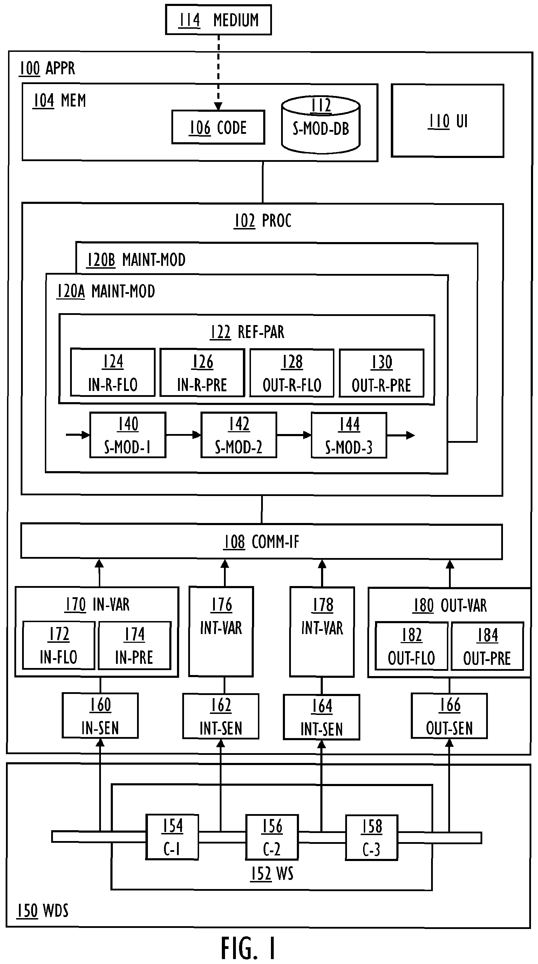

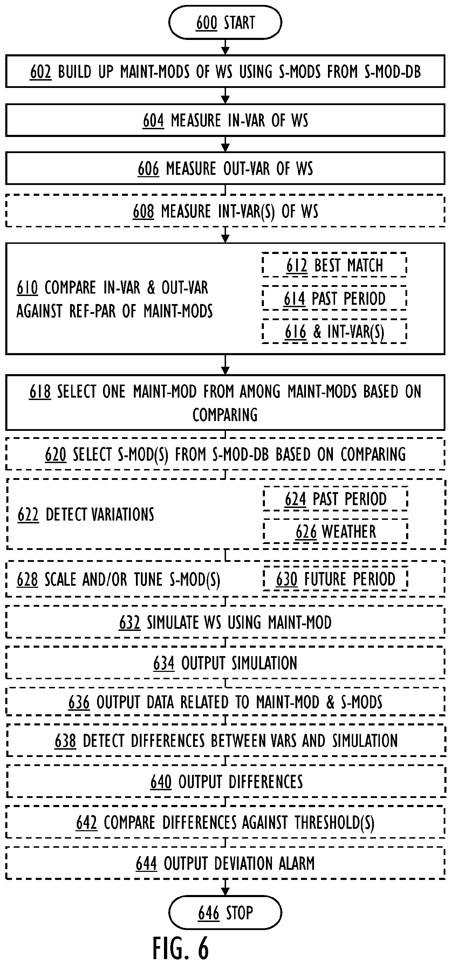

Let us study simultaneously FIG. 1, which illustrates embodiments of an apparatus 100 for operating a maintenance model modelling a water storage 152 (comprising various components 154, 156, 158) of a water distribution system 150, and FIG. 6, which illustrates embodiments of an operation of the apparatus 100 as a method/algorithm.

The method starts in 600 and ends in 646. Note that the method may run as long as required (after the start-up of the apparatus 100 until switching off) by looping back to an earlier operation.

The operations are not strictly in chronological order in FIG. 6, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

The apparatus 100 comprises an input sensor 160 configured and positioned to measure a measured input variable 170 of the water storage 152 in 604, and an output sensor 166 configured and positioned to measure a measured output variable 180 of the water storage 152 in 606.

The apparatus 100 also comprises one or more memories 104 including computer program code 106, and one or more processors 102 configured to execute the computer program code 106 to cause the apparatus 100 to perform the required operations.

In 602, a plurality of the maintenance models 120A, 120B modelling the water storage 152 is built up using interconnected submodels 140, 142, 144 selected from among a collection 112 of different types of submodels.

In 610, the measured input variable 170 and the measured output variable 180 are compared against reference parameters 122 of the plurality of the maintenance models 120A, 120B.

Based on the comparing in 610, one maintenance model is selected from among the plurality of the maintenance models 120A, 120B as the selected maintenance model 120A in 618.

In an embodiment, the apparatus 100 is implemented as a distributed apparatus: the input sensor 160 and the output sensor 166 being positioned to measure the water storage 152, and a processing part comprising the one or more memories 104 including the computer program code 106 and the one or more processors 102.

The input sensor 160 and the output sensor 166 may each comprise one or more sensors configured to measure a physical quantity and convert it into an electrical signal. In an embodiment, the measured input variable 170 comprises a measured input flow 172 and/or a measured input pressure 174, and the measured output variable 180 comprises a measured output flow 182 and/or a measured output pressure 184. Accordingly, the reference parameters 122 comprise an input reference flow 124 and/or an input reference pressure 126 and/or an output reference flow 128 and/or an output reference pressure 130.

The input sensor 160 and the output sensor 166 may each comprise other types of sensors configured to measure other physical quantities relating to a temperature, a humidity, a pH, an electrical quantity such as an electrode potential, an optical quantity such as a transparency or a scattering, or some other physical quantity, for example. The input sensor 160 and the output sensor 166 may also receive some external data and pass it on, or generate some further data on the basis of the external data. The external data may relate to positioning, for example. The external data may include signal transmitted by satellites of a global navigation satellite system (GNSS), and/or location coordinates generated by cellular radio positioning.

In general, the input sensor 160 and the output sensor 166 may each comprise other parts such as a processor, a communication interface, a battery to provide electric energy for its operation (or other power source or power interface), and a housing protecting electronics from external influences (dust, moisture, mechanical shocks, etc.). The battery may be an electric battery converting stored chemical energy into electrical energy. The electric battery may be rechargeable.

The apparatus 100 may comprise a communication interface 108 configured to communicate with the input sensor 160 and the output sensor 166.

The term 'processor' 102 refers to a device that is capable of processing data. Depending on the processing power needed, the apparatus 100 may comprise several processors 102 such as parallel processors, a multicore processor, or a computing environment that simultaneously utilizes resources from several physical computer units (sometimes these are referred as cloud or virtualized computing environments). When designing the implementation of the processor 102, a person skilled in the art will consider the requirements set for the size and power consumption of the apparatus 100, the necessary processing capacity, production costs, and production volumes, for example.

A non-exhaustive list of implementation techniques for the processor 102 and the memory 104 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 104 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code 106 may be implemented by software. In an example embodiment, the software may be written by a suitable programming language, and the resulting executable code may be stored in the memory 104 and run by the processor 102. The computer program code 106 implements the method/algorithm illustrated in FIG. 6. The computer program code 106 may be coded as a computer program (or software) using a programming language, which may be a high-level programming language, such as C, C++ or Rust, or a low-level programming language, such as a machine language or an assembler, for example. The computer program code 106 may be in source code form, object code form, executable file, or in some intermediate form, but for use in the one or more processors 102 it is in an executable form. There are many ways to structure the computer program code 106: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 106 for performing a wide variety of standard operations. In addition, an operating system (such as a general-purpose operating system) may provide the computer program code 106 with system services.

An example embodiment provides a computer-readable medium 114 storing computer program code 106, which, when loaded into the one or more processors 102 and executed by one or more processors 102, causes the one or more processors 102 to perform the computer-implemented method/algorithm. The computer-readable medium 114 may comprise at least the following: any entity or device capable of carrying the computer program code 106 to the one or more processors 102, a record medium, a computer memory, a read-only memory, an electrical carrier signal, a telecommunications signal, and a software distribution medium. In some jurisdictions, depending on the legislation and the patent practice, the computer-readable medium 114 may not be the telecommunications signal. In an example embodiment, the computer-readable medium 114 may be a computer-readable storage medium. In an example embodiment, the computer-readable medium 114 may be a non-transitory computer-readable storage medium.

Note that the processors of the input sensor 160 and the output sensor 166 may be implemented with similar technologies.

In an example embodiment, the apparatus 100 may be a stand-alone apparatus 100 as in FIG. 1, i.e., the apparatus 100 is a separate unit as well as the input sensor 160 and the output sensor 166 are separate units. The communication interface 108 may be implemented with a standard or proprietary wireless or wired communication technology.

The apparatus 100 as the separate unit may be implemented as a physical unit, or as a service implemented by a networked server apparatus.

The apparatus 100 may be a computer, laptop computer, tablet computer, smartphone, general-purpose mobile computing device, or some other electronic data processing apparatus. The apparatus 100 may be a general-purpose off-the-shelf computing device, as opposed to a purpose-build proprietary equipment, whereby research & development costs will be lower as only the special-purpose software (and not the hardware) needs to be designed, implemented, and tested.

The networked server apparatus 100 may be a networked computer server, which interoperates with the input sensor 160 and the output sensor 166 according to a client-server architecture, a cloud computing architecture, a peer-to-peer system, or another applicable distributed computing architecture.

In an example embodiment, the communication interface 108 may comprise one or more wireless transceivers configured to operate using one or more of the following: a cellular radio network, a wireless local area network (WLAN), a short-range radio network (such as Bluetooth), a radio network employing a subscriber identity module (SIM), one or more subscriber identity modules selected from among a plurality of subscriber identity modules coupled with the one or more wireless transceivers.

The wireless data transmission may be implemented with a suitable cellular communication technology such as GSM, GPRS, EGPRS, WCDMA, UMTS, 3GPP, IMT, LTE, LTE-A, 3G, 4G, 5G etc. and/or with a suitable non-cellular communication technology such as Bluetooth, Bluetooth Low Energy, Wi-Fi, WLAN, Zigbee, etc. Other applicable technologies include LPWAN (Low Power Wide Area Network), NB-IoT (Narrowband loT), Sigfox, LoRaWAN (Long Range Wide Area Network), QT network, etc.

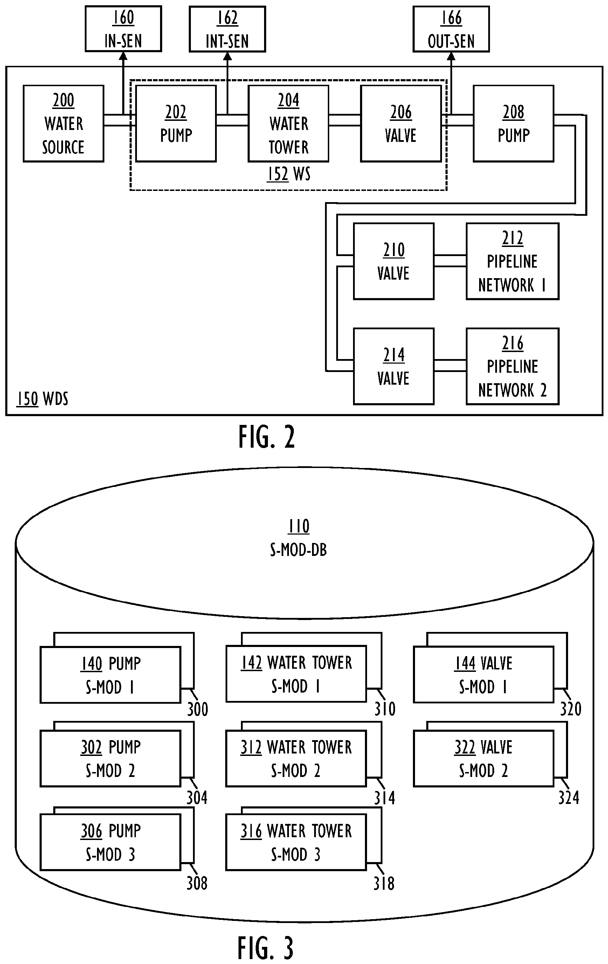

FIG. 2 illustrates embodiments of a water distribution system 150 with its various components. A water source 200 provides water for the water storage 152. A pump 208 is configured to pump the water from the water storage 152 through valves 210, 214 to two different pipeline networks 212, 216. The water storage 152 includes a pump 202 configured to pump the water from the water source 200 to a water tower 240, from which the water is configured to be released through a valve 206 to the pump 208. Note the placement of the input sensor 160 at the input of the water storage 152 before the pump 202 and the placement of the output sensor 166 at the output of the water storage 152 after the valve 206.

FIG. 3 illustrates embodiments of submodels. The collection 112 of the different types of submodels may be implemented as a database or other applicable data storage structure. The collection 112 comprises different types of submodels including, but not limited to: a pump submodel 140, a valve submodel 144, a reservoir submodel, a water tank submodel, a water tower submodel 142, a cistern submodel, a pumping station submodel, an elevated section of a pipeline submodel. As illustrated in FIG. 3, each general type submodel like pump, water and valve may comprise several alternative submodels: three different pump submodels 140, 302, 306, three different water tower submodels 142, 312, 316, and two different valve submodels 144, 322, for example.

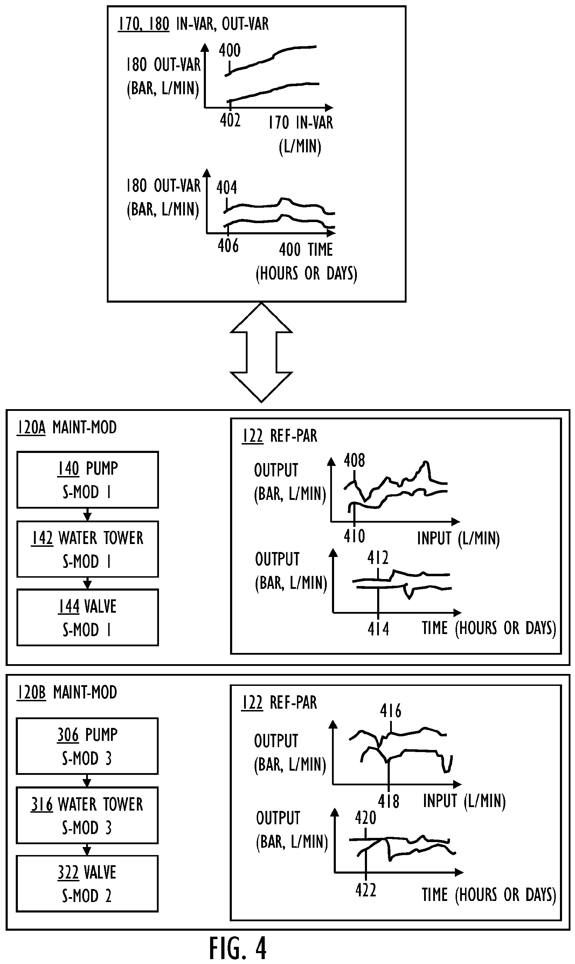

FIG. 4 illustrates embodiments of maintenance models for the water storage 152 of FIG. 2. Note that although embodiments show two alternative maintenance models 120A, 120B, more alternatives may be built up in 602.

The first maintenance model 120A includes the first pump submodel 140, the first water tower submodel 142, and the first valve submodel 144, which all have been selected from the collection of FIG. 3 and interconnected, the direction of the arrow indicating the direction of the water flow.

The second maintenance model 120B includes the third pump submodel 306, the third water tower submodel 316, and the second valve submodel 322.

The measured input variable 170 and the measured output variable 180 are depicted on the upper part of FIG. 4. The measured input variable 170 is tied to the x axis, and the measured output variable 180 is tied to the y axis. In this embodiment, the measured input variable 170 includes the input flow (in litres/minute), and the output variable 180 includes both the output flow (in litres/minute) and the output pressure (in bars). A function between the input flow and the output pressure is illustrated by a curve 400. A function between the input flow and the output flow is illustrated by a curve 402.

The lower part of FIG. 4 also illustrates the reference parameters 122 of each maintenance model 120A, 120B. The reference parameters 122 are illustrated by curves 408, 410, 416, 418 in a similar co-ordinate system as the curves 400, 402.

In an embodiment, the selecting in 618 is performed based on a best match 612 of the measured input variable 170 and the measured output variable 180 against the reference parameters 122 of the selected maintenance model 120A in the comparing 610. The best match 612 may be found by comparing the measured curves 400, 402 with the reference curves 408, 410, 416, 418. Various statistical analysis methods may also be used to find the best match, including but not limited to a residual sum of squares indicating a measure of discrepancy between the data and the estimation model.

In an embodiment the comparing in 610 is performed based on a plurality of the measured input variables 170 and a plurality of the measured output variables 180, which all have been measured during a past time period 614. In this way, the comparison 610 is not based on error-prone single values but on multiple values. The multiple values may be processed as an arithmetic mean, for example. Another embodiment is illustrated with curves 404, 404 illustrating the output variable 180 over a time period, and corresponding curves 412, 414, 420, 422 illustrating the reference parameters 122 over a time period. The time period may be expressed in hours or days, for example, and it may cover a day, a week, a month, or a year, wherein each of these time periods may contain some kind of periodic or cyclic behaviour. For example, the water usage may increase during a morning shower in the workdays, but not necessarily during the weekend. Or in another example, various seasons with different temperatures may have an effect on the functioning of the water storage 152, for example.

Let us return to FIG. 1 and FIG. 2, which illustrate an embodiment, wherein the apparatus 100 comprises one or more internal sensors 162, 164 configured and positioned to measure one or more measured internal variables 176, 178 of the water storage 152. The apparatus 100 is also caused, in the comparing in 610, to compare 616 also the one or measured internal variables 176,178 against the reference parameters 122 of the plurality of the maintenance models 120A, 120B.

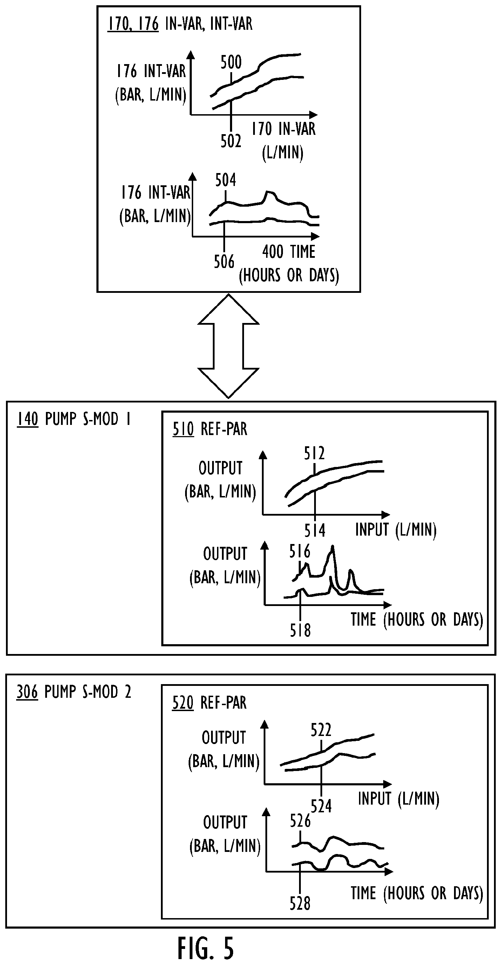

In the water distribution system of FIG. 2, one internal sensor 162 is placed to measure the internal variable 176 after the pump 202. FIG. 5 illustrates the measured input variable 170 and the measured internal variable 176 in a similar way as the FIG. 4: a function between the input flow (defined by the measured input variable 170) and the output pressure (defined by the measured internal variable 176) is illustrated by a curve 500, and a function between the input flow and the output flow (defined the measured internal variable 176) is illustrated by a curve 502. The lower part of FIG. 5 also illustrates the reference parameters 510, 520 of each pump submodel 140, 306. The reference parameters 510, 520 are illustrated by curves 512, 514, 522, 524. By performing the additional comparison, i.e., by comparing the maintenance models 120A, 120B and also comparing parts such as individual submodels of the maintenance models, the resulting maintenance model 120A may even better match the real water storage 152.

In an embodiment, the apparatus 100 is caused, based on the comparing in 610, to select 620 for one or more submodels of the maintenance model 120A, a selected submodel 140 from among submodel variants 140, 300, 302, 304, 306, 308 of each type in the collection 112 of the different types of submodels. In FIG. 3 for each submodel, there may be one or more submodel variants: the first pump submodel 140 has a first pump submodel variant 300, the second pump submodel 302 has a second pump submodel variant 304, and the third pump submodel 306 has a third pump submodel variant 308. Other illustrated submodels 142, 312, 316, 144, 322 also have submodel variants 310, 314, 318, 320, 324. In this way, the resulting maintenance model 120A may even better match the real water storage 152.

In an embodiment, the apparatus 100 is caused to detect 622 variations in the measured input variable 170 and the measured output variable 180 over a past time period 624, and scale 628 and/or tune the one or more submodels of the selected maintenance model 120A so that the reference parameters 122 of the selected maintenance model 120A better match the measured input variable 170 and the measured output variable 180 during a future time period 630. For example, in the embodiment illustrated in FIG. 4, the reference parameters may be scaled by a linear or a functional transformation that enlarges or diminishes the reference parameters, or tuned by otherwise changing the behaviour between an input and an output.

In an embodiment, the apparatus 100 is caused to detect 622 the variations during a past day and/or a past week and/or a past year as the past time period 624, and scale 628 and/or tune the one or more submodels of the selected maintenance model 120A so that the reference parameters 122 of the selected maintenance model 120A better match the measured input variable 170 and the measured output variable 180 during a future day and/or a future week and/or a future year as the future time period 630. The time period may be expressed in hours or days, for example, and it may cover a day, a week, a month, or a year, wherein each of these time periods may contain some kind of periodic or cyclic behaviour.

In an embodiment, the apparatus 100 is caused to detect 622 the variations during the past time period 624 having subperiods with different weather conditions 626, and scale 628 and/or tune the one or more submodels of the selected maintenance model 120A so that the reference parameters 122 of the selected maintenance model 120A better match the measured input variable 170 and the measured output variable 180 during future subperiods with different weather conditions 628 as the future time period 630. In this way, the maintenance model 120A may provide more accurate results also during changing weather conditions.

In an embodiment illustrated in FIG. 1, the apparatus 100 comprises a user interface 110 configured to interact with a user. The user interface 110 may comprise a screen displaying the simulation with appropriate structures and parameters, for example. Note that the user interface 110 may be a part of the apparatus 100, or the user interface 110 may be communicatively coupled with the apparatus 100. The user interface 110 may thus be a part of user apparatus carried by a person on call, or operated by a maintenance technician or engineer.

In an embodiment, the apparatus 100 is caused to simulate 632 an operation of the water storage 152 using the selected maintenance model 120A, and output 634, via the user interface 110, the simulated operation.

In an embodiment, the apparatus 100 is caused to output 636, via the user interface 110, data related to the selected maintenance model 120A and the interconnected submodels 140, 142, 144 of the selected maintenance model 120A.

In an embodiment, the apparatus 100 is caused to detect 638 one or more differences of the measured input variable 170 and the measured output variable 180 against corresponding parameters resulting from the simulated operation, and outputting 640, via the user interface 110, the one or more differences. In this way, the operation of the selected maintenance model 120A may be observed during the operation of the real water storage 152.

In an embodiment, the apparatus 100 is caused to compare 642 the one or more differences against one or more threshold values, and if the one or more differences exceed one or more of the threshold values in the comparing 642, output 644, via the user interface 110, a deviation alarm.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An apparatus (100) for operating a maintenance model modelling a water storage (152) of a water distribution system (150), comprising:
an input sensor (160) configured and positioned to measure (604) a measured input variable (170) of the water storage (152);
an output sensor (166) configured and positioned to measure (606) a measured output variable (180) of the water storage (152);
one or more memories (104) including computer program code (106); and
one or more processors (102) configured to execute the computer program code (106) to cause the apparatus (100) to perform at least the following:
building (602) up a plurality of the maintenance models (120A, 120B) modelling the water storage (152) using interconnected submodels (140, 142, 144) selected from among a collection (112) of different types of submodels;
comparing (610) the measured input variable (170) and the measured output variable (180) against reference parameters (122) of the plurality of the maintenance models (120A, 120B); and
based on the comparing (610), selecting (618) one maintenance model from among the plurality of the maintenance models (120A, 120B) as the selected maintenance model (120A).

2. The apparatus of claim 1, wherein the apparatus (100) is caused to perform the following:
performing the selecting (618) based on a best match (612) of the measured input variable (170) and the measured output variable (180) against the reference parameters (122) of the selected maintenance model (120A) in the comparing (610).

3. The apparatus of any preceding claim, wherein the apparatus (100) is caused to perform the following:
performing the comparing (610) based on a plurality of the measured input variables (170) and a plurality of the measured output variables (180), which all have been measured during a past time period (614).

4. The apparatus of any preceding claim, wherein the apparatus (100) comprises:
one or more internal sensors (162, 164) configured and positioned to measure one or more measured internal variables (176, 178) of the water storage (152),
and the apparatus (100) is caused to perform the following:
in the comparing (610), comparing (616) also the one or measured internal variables (176, 178) against the reference parameters (122) of the plurality of the maintenance models (120A, 120B).

5. The apparatus of any preceding claim, wherein the apparatus (100) is caused to perform the following:
based on the comparing (610), selecting (620) for one or more submodels of the maintenance model (120A), a selected submodel (140) from among submodel variants (140, 300, 302, 304, 306, 308) of each type in the collection (112) of the different types of submodels.

6. The apparatus of any preceding claim, wherein the apparatus (100) is caused to perform the following:
detecting (622) variations in the measured input variable (170) and the measured output variable (180) over a past time period (624); and
scaling (628) and/or tuning the one or more submodels of the selected maintenance model (120A) so that the reference parameters (122) of the selected maintenance model (120A) better match the measured input variable (170) and the measured output variable (180) during a future time period (630).

7. The apparatus of claim 6, wherein the apparatus (100) is caused to perform the following:
detecting (622) the variations during a past day and/or a past week and/or a past year as the past time period (624); and
scaling (628) and/or tuning the one or more submodels of the selected maintenance model (120A) so that the reference parameters (122) of the selected maintenance model (120A) better match the measured input variable (170) and the measured output variable (180) during a future day and/or a future week and/or a future year as the future time period (630).

8. The apparatus of claim 6, wherein the apparatus (100) is caused to perform the following:
detecting (622) the variations during the past time period (624) having subperiods with different weather conditions (626);
scaling (628) and/or tuning the one or more submodels of the selected maintenance model (120A) so that the reference parameters (122) of the selected maintenance model (120A) better match the measured input variable (170) and the measured output variable (180) during future subperiods with different weather conditions (628) as the future time period (630).

9. The apparatus of any preceding claim, wherein the apparatus (100) comprises:
a user interface (110) configured to interact with a user, and
the apparatus (100) is caused to perform the following:
simulating (632) an operation of the water storage (152) using the selected maintenance model (120A); and
outputting (634), via the user interface (110), the simulated operation.

10. The apparatus of claim 9, wherein the apparatus (100) is caused to perform the following:
outputting (636), via the user interface (110), data related to the selected maintenance model (120A) and the interconnected submodels (140, 142, 144) of the selected maintenance model (120A).

11. The apparatus of claim 9 or 10, wherein the apparatus (100) is caused to perform the following:
detecting (638) one or more differences of the measured input variable (170) and the measured output variable (180) against corresponding parameters resulting from the simulated operation; and
outputting (640), via the user interface (110), the one or more differences.

12. The apparatus of claim 11, wherein the apparatus (100) is caused to perform the following:
comparing (642) the one or more differences against one or more threshold values; and
if the one or more differences exceed one or more of the threshold values in the comparing (642), outputting (644), via the user interface (110), a deviation alarm.

13. The apparatus of any preceding claim, wherein the collection (112) of different types of submodels comprises one or more of the following: a pump submodel (140), a valve submodel (144), a reservoir submodel, a water tank submodel, a water tower submodel (142), a cistern submodel, a pumping station submodel, an elevated section of a pipeline submodel.

14. The apparatus of any preceding claim, wherein the measured input variable (170) comprises a measured input flow (172) and/or a measured input pressure (174) and the measured output variable (180) comprises a measured output flow (182) and/or a measured output pressure (184), and the reference parameters (122) comprise an input reference flow (124) and/or an input reference pressure (126) and/or an output reference flow (128) and/or an output reference pressure (130).
